# EUROPÄISCHE PATENTSCHRIFT

(11) **EP 0 924 163 B1**
(45) Veröffentlichungstag und Bekanntmachung des Hinweises auf die Patenterteilung: **05.03.2003**
(21) Anmeldenummer: 98121342.4
(22) Anmeldetag: 10.11.1998
(51) Int. Cl.: C01B 3/38, C01B 3/32, C01B 3/50, H01M 8/06

(54) **Verfahren zur Wasserdampfreformierung eines Kohlenwasserstoffs oder Kohlenwasserstoffderivats, damit betreibbare Reformierungsanlage und Brennstoffzellen-Betriebsverfahren**
Process for steam reforming a hydrocarbon or hydrocarbon derivative, reforming apparatus using this process and process for operating fuel cells
Procédé de reformage à la vapeur d'un hydrocarbure ou d'un dérivé d'un hydrocarbure, dispositif de reformage utilisant ce procédé et procédé de fonctionnement de piles à combustible

(30) Priorität: 16.12.1997 DE 19755815
(43) Veröffentlichungstag der Anmeldung: 23.06.1999
(73) Patentinhaber: Ballard Power Systems AG, 73230 Kirchheim / Teck-Nabern (DE)
(72) Erfinder: Autenrieth, Rainer, 89155 Erbach (DE); Boneberg, Stefan, 89134 Blaustein (DE); Heil, Dietmar, 88477 Hörenhausen (DE); Poschmann, Thomas, 89073 Ulm (DE); Wieland, Steffen, 70180 Stuttgart (DE)
(74) Vertreter: Beyer, Andreas, Dr.

(56) Entgegenhaltungen:
- DE-A- 4 423 587
- GB-A- 2 283 235
- US-A- 5 248 566
- US-A- 5 674 301
- PATENT ABSTRACTS OF JAPAN vol. 096, no. 004, 30. April 1996 (1996-04-30) & JP 07 315801 A (NGK INSULATORS LTD), 5. Dezember 1995 (1995-12-05) & US 5 897 970 A (MANABU ISOMURA, TAKAO SOMA, TOMONORI TAKAHASHI) 27. April 1999 (1999-04-27)

## Beschreibung

Die Erfindung bezieht sich auf ein Verfahren zum Betrieb einer Anlage zur Wasserdampfreformierung eines Kohlenwasserstoffs nach dem Oberbegriff des Anspruches 1, auf eine nach diesem Verfahren betreibbare Reformierungsanlage nach dem Oberbegriff des Anspruches 7, insbesondere auf ein Verfahren zum Betrieb einer mobilen Anlage zur Wasserdampfreformierung von Methanol in einem brennstoffzellenbetriebenen Kraftfahrzeug zur Bereitstellung des für die Brennstoffzellen benötigten Wasserstoffs und eine dergestalt betreibbare Anlage, sowie auf ein Betriebsverfahren eines Brennstoffzellensystems. Unter dem Begriff Kohlenwasserstoff sollen dabei vorliegend neben eigentlichen Kohlenwasserstoffen der Einfachheit halber auch im weiteren Sinne Derivate derselben verstanden werden, wie Methanol.

In der Offenlegungsschrift JP 4-338101 (A) ist ein Verfahren zum Starten eines von einem Reformierungsreaktor mit Wasserstoff gespeisten Brennstoffzellensystems offenbart. Dabei ist ein Wasserstoffspeicher vorgesehen, dem das Anodenabgas der Brennstoffzellen zugeführt wird. Zum Starten wird Wasserstoff aus diesem Wasserstoffspeicher einem mit dem Reformierungsreaktionsraum in Wärmekontakt stehenden katalytischen Brenner zugeführt und dort verbrannt.

Bei einer in der Offenlegungsschrift JP 8-231202 (A) beschriebenen Wasserstofferzeugungsanlage wird der Wasserstoff durch exotherme partielle Oxidation von Methanol gewonnen. Mit der dadurch erzeugten Wärme wird eine wärmeleitfähige Zufuhrleitung beheizt, um das zugeführte Methanol bis zum Erreichen des Reaktionsraums zu verdampfen.

Bei einem in der Patentschrift US 5.248.566 beschriebenen Brennstoffzellensystem, dessen Brennstoffzellen anodenseitig von Wasserstoff gespeist werden, der von einem partiell oxidierenden Reformierungsreaktor erzeugt wird, wird das Anodenabgas der Brennstoffzellen in einem Nachbrenner unter Luftzufuhr verbrannt. Die dadurch erzeugte Wärme wird zur Heizung des Innenraums eines Kraftfahrzeuges verwendet, das mit dem Brennstoffzellensystem ausgerüstet ist.

Das Membranmodul dient mit seiner selektiv wasserstoffdurchlässigen Membran dazu, den bei warmgelaufener Anlage durch die Reformierungsreaktion erzeugten Wasserstoff von den übrigen Bestandteilen des gebildeten Reformatgases abzutrennen. Dies stellt neben alternativen Vorgehensweisen, wie CO-Umsetzung zu Kohlendioxid über eine CO-Oxidation oder die sogenannte CO-Shiftreaktion, eine Methode dar, ein im wesentlichen aus Wasserstoff bestehendes Produktgas zu erhalten, in welchem die CO-Konzentration einen bestimmten, geringen Schwellwert nicht überschreitet. Dies ist zum Beispiel beim Einsatz des Produktgases als Anodengas eines Brennstoffzellensystems von Bedeutung, da dort das Kohlenmonoxid als Katalysatorgift wirkt. Das Membranmodul kann als separate Einheit dem Reformierungsreaktor nachgeschaltet oder in den Reformierungsreaktor integriert sein. Anlagen der letztgenannten Art sind in der Patentschrift DE 44 23 587 C2 beschrieben.

Bekanntermaßen verläuft die Wasserdampfreformierungsreaktion zur Reformierung eines Kohlenwasserstoffs oder Kohlenwasserstoffderivats, wie Methanol, endotherm und erfolgt bei einer gegenüber der Raumtemperatur erhöhten Reaktionstemperatur. Bei einem Kaltstart der Anlage kann daher mit der Wasserdampfreformierungsreaktion nicht sofort Wasserstoff bereitgestellt werden, vielmehr müssen zunächst die Anlagenteile auf eine entsprechende Betriebstemperatur gebracht werden. Gerade im Anwendungsfall von Kraftfahrzeugen besteht jedoch der Wunsch, nach Auslösen eines Startvorgangs des Fahrzeuges und damit auch der Reformierungsanlage möglichst unverzüglich Antriebsleistung durch die Brennstoffzellen zur Verfügung zu haben, was wiederum erfordert, daß die Reformierungsanlage schnellstmöglich und mit möglichst geringem Aufwand Wasserstoff bereitzustellen vermag. Hierzu wurden bereits verschiedentlich spezielle Maßnahmen für den Kaltstart von Reformierungsanlagen vorgeschlagen.

So ist es aus den Patentschriften FR 1.417.757 und FR 1.417.758, die in der oben genannten DE 44 23 587 C2 zitiert sind, bekannt, bei einem Kaltstart einer Anlage zur Wasserdampfreformierung von Methanol zunächst ein Gemisch aus Methanol und Oxidationsmittel in den Reformierungsreaktor einzuleiten, um dort eine entsprechende Verbrennungsreaktion durchzuführen und damit den Reaktor aufzuheizen. Danach wird die Zufuhr des Oxidationsmittels beendet und stattdessen das zu reformierende Methanol/Wasserdampf-Gemisch zugeführt und die Wasserdampfreformierungsreaktion gestartet. Bei der Anlage der FR 1.417.757 steht mit dem Reformierungsreaktionsraum ein Heizraum in Wärmekontakt, in welchem das nicht durch eine Abtrennmembran diffundierte Restgas aus dem Reaktionsraum nichtkatalytisch mit Sauerstoff verbrannt wird.

Spezielle Kaltstartmaßnahmen wurden auch für Anlagen zur Wasserdampfreformierung eines Kohlenwasserstoffs ohne Verwendung einer Wasserstoffabtrennstufe vorgeschlagen. So beschreiben die Patentschriften US 4.820.594 und US 5.110.559 Anlagen zur Wasserdampfreformierung eines Kohlenwasserstoffs, bei denen im Reformierungsreaktor ein Brenner integriert ist, der mit dem Reaktionsraum des Reaktors über eine wärmeleitfähige Trennwand in Wärmekontakt steht. Beim Kaltstart wird in diesem Brenner ein brennbares Gemisch bei offener Flamme verbrannt, das im Fall der US 5.110.559 aus dem Reformierungsreaktor selbst stammt, wobei dem Reaktionsraum schon beim Kaltstart der zu reformierende, brennbare Kohlenwasserstoff zugeführt wird. Die heißen Verbrennungsabgase des in den Reaktor integrierten Brenners werden in einen nachgeschalteten CO-Shiftkonverter weitergeleitet, um diesen damit aufzuheizen und auf diese Weise die Anlage schneller auf Betriebstemperatur zu bringen.

Der Erfindung liegt als technisches Problem die Bereitstellung eines Verfahrens und einer Anlage zur Wasserdampfreformierung sowie eines Brennstoffzellen-Betriebsverfahrens der eingangs genannten Art zugrunde bei denen die Anlagenkomponenten bei einem Kaltstart möglichst rasch ihre Betriebstemperatur erreichen, so daß entsprechend schnell Wasserstoff bereitgestellt und ggf. in Brennstoffzellen genutzt werden kann.

Die Erfindung löst dieses Problem durch die Bereitstellung eines Wasserdampfreformierungsverfahrens mit den Merkmalen des Anspruches 1, eines Brennstoffzellen-Betriebsverfahrens mit den Merkmalen des Anspruchs 6 sowie einer Reformierungsanlage mit den Merkmalen des Anspruches 7.

Durch das Verfahren nach Anspruch 1 kann die Reformierungsanlage bei einem Kaltstart ohne großen Aufwand vergleichsweise rasch auf ihren normalen, warmgelaufenen Betriebszustand gebracht werden, wobei sie schon beim Start mit einem für das nachgeschaltete Membranmodul zur Unterstützung der Wasserstoffdiffusion günstigen erhöhten Betriebsdruck von typischerweise ca. 10bar und mehr betrieben werden kann. Dazu wird in einer ersten Betriebsphase die katalytische Brennereinrichtung mittels katalytischer Verbrennung des zugeführten Kohlenwasserstoffs, der ansonsten zur Reformierung bevorratet ist, und/oder von zwischengespeichertem, in einem vorangegangenen Betriebszyklus erzeugtem Wasserstoff auf eine oberhalb der Wassersiedetemperatur liegende Temperatur erhitzt. Mit der katalytischen Brennereinrichtung stehen bei der betriebenen Anlage, wie z.B. der durch Anspruch 7 charakterisierten Anlage, mindestens der Verdampfer und der Reformierungsreaktor über eine jeweilige wärmeleitende Trennwand in Wärmekontakt, so daß diese entsprechend rasch aufgeheizt werden.

In einer zweiten Betriebsphase, die sich an die typischerweise nur wenige Sekunden andauernde erste Betriebsphase anschließt, wird dann bereits Wasser und Kohlenwasserstoff in einem relativ hohen Wasser/Kohlenwasserstoff-Verhältnis in den Verdampfer dosiert. Das gebildete, wasserreiche Kohlenwasserstoff/Wasserdampf-Gemisch gelangt in den Reformierungsreaktor, wo bereits in begrenztem Umfang eine Reformierung des Kohlenwasserstoffs ablaufen kann. Das aus dem Reaktor austretende, bereits wasserstoffreiche Stoffgemisch, das ggf. restlichen Kohlenwasserstoff und Wasser enthalten kann, wird in noch heißem Zustand in das nachgeschaltete Membranmodul geleitet und heizt dort die Membran auf. Mit fortschreitender Erwärmung der Membran erhöht sich deren Wasserstoffdiffusionsvermögen. Der ggf. nicht hindurchdiffundierte Wasserstoff und die übrigen Bestandteile des Stoffgemischs werden dann vom Membranmodul in die katalytische Brennereinrichtung weitergeleitet, wo das Stoffgemisch an der dortigen katalytischen Verbrennung teilnimmt.

Bei einem nach Anspruch 2 weitergebildeten Verfahren wird in einer an die zweite anschließenden dritten Betriebsphase die Kohlenwasserstoff- bzw. Wasserstoff-Zufuhr zur katalytischen Brennereinrichtung verringert, da zu diesem Zeitpunkt die von dieser beheizbaren Anlagenkomponenten schon weitgehend aufgeheizt sind.

Bei einem nach Anspruch 3 weitergebildeten Verfahren wird in einer an die dritte anschließenden vierten Betriebsphase die Konzentration des zur Reformierung in den Reformierungsreaktor eingeleiteten Kohlenwasserstoffs mit steigender Temperatur des Membranmoduls, d.h. speziell der dortigen Membran, sukzessive erhöht, da die Membran nun zunehmend in der Lage ist, den durch die Reformierungsreaktion gebildeten Wasserstoff abzutrennen.

Bei einem nach Anspruch 4 weitergebildeten Verfahren wird der Gasdruck im Membranmodul und damit auch derjenige im vorgeschalteten Reformierungsreaktor während des Aufheizvorgangs in Abhängigkeit vom Taupunkt des durch das Membranmodul hindurchgeführten, aufheizenden Stoffgemischs sukzessive bis zum Normalbetriebsdruck erhöht.

Bei einem nach Anspruch 5 weitergebildeten Verfahren wird das aus dem Reformierungsreaktor austretende Stoffgemisch nach Passieren des Membranmoduls wenigstens währen der zweiten Betriebsphase vor Eintritt in die katalytische Brenneinrichtung derart gekühlt, daß eventuell enthaltenes Wasser auskondensiert, so daß ein zu hoher Wasseranteil in der katalytischen Brennereinrichtung vermieden wird. Dieses Verfahren eignet sich insbesondere zum Betrieb einer gemäß Anspruch 7 weitergebildeten Reformierungsanlage, wozu diese mit einem geeigneten Kühler ausgerüstet ist.

Bei dem Brennstoffzellen-Betriebsverfahren nach Anspruch 6 wird das Verbrennungsabgas der katalytischen Brennereinrichtung einer erfindungsgemäß betriebenen Wasserdampfreformierungsanlage zum Aufheizen eines Kühlkreislaufs eines Brennstoffzellensystems genutzt, das mit dem von der Reformierungsanlage erzeugten Wasserstoff gespeist wird.

Vorteilhafte Ausführungsformen der Erfindung sind in den Zeichnungen dargestellt und werden nachfolgend beschrieben. Hierbei zeigen:
- Fig. 1: ein Blockdiagramm einer Wasserdampfreformierungsanlage und
- Fig. 2: ein Flußdiagramm eines für die Anlage von Fig. 1 geeigneten Betriebsverfahrens.

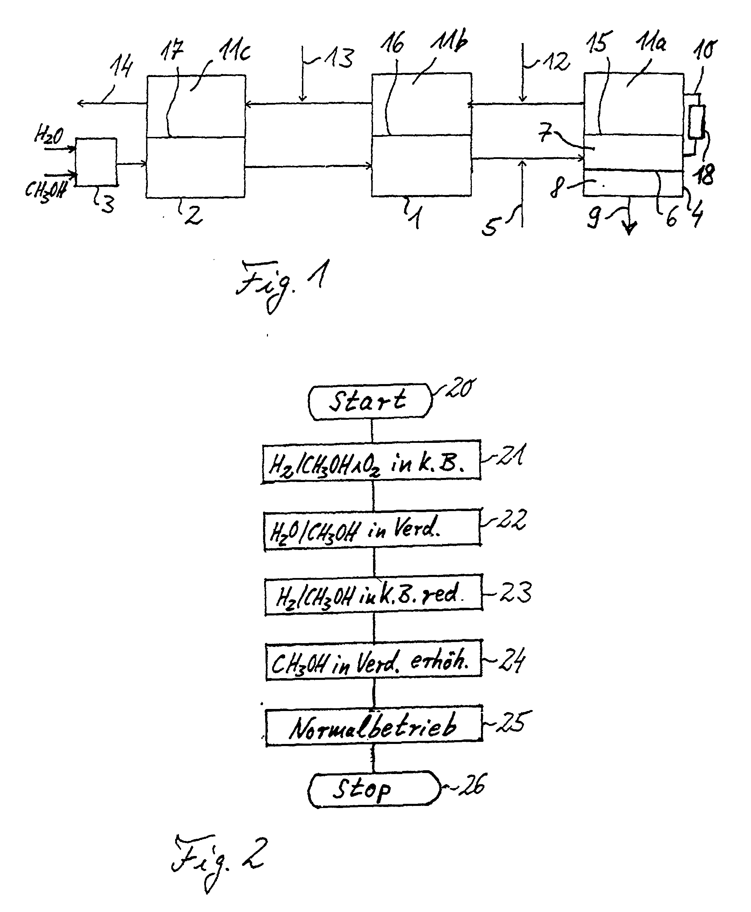

Die in Fig. 1 dargestellte Anlage eignet sich zum Beispiel zur Wasserdampfreformierung von Methanol im mobilen Einsatz in einem brennstoffzellenbetriebenen Kraftfahrzeug, um den für die Brennstoffzellen benötigten Wasserstoff bereitzustellen. Die Anlage beinhaltet einen Reformierungsreaktor 1, der ein zur Katalysierung der Wasserdampfreformierungsreaktion geeignetes Katalysatormaterial enthält, z.B. ein Cu/ZnO-Material. Dem Reformer 1 ist ein Verdampfer 2 vorgeschaltet, in den mittels einer entsprechenden Dosiereinrichtung 3 Wasser und Methanol aus entsprechenden, im Fahrzeug mitgeführten, nicht gezeigten Vorratstanks eingespeist werden können. An den Reformierungsreaktor 1 schließt sich ein Membranmodul 4 an, wobei eine Zwischeneinspeisungsleitung 5 vorgesehen ist, über die bei Bedarf Wasser und/oder Luft zu dem aus dem Reaktor 1 austretenden Stoffgemisch vor Eintritt in das Membranmodul 4 zudosiert werden können.

Das Membranmodul 4 beinhaltet eine selektiv für Wasserstoff durchlässige Membran 6, die den Modulraum in einen Gasdurchtrittsraum 7 und einen Wasserstoffabzugsraum 8 unterteilt. Das eintrittsseitige Stoffgemisch wird über einen entsprechenden Einlaß in den Gasdurchtrittsraum 7 eingeleitet. Soweit es Wasserstoff enthält und der Betriebszustand des Membranmoduls 4 dies zuläßt, diffundiert der Wasserstoff wenigstens teilweise durch die Membran 6 hindurch in den Wasserstoffabzugsraum 8, wo er über eine Abzugsleitung 9 entnommen und beispielsweise dem Anodenteil eines Brennstoffzellensystems zugeführt werden kann. Im übrigen verläßt das Stoffgemisch den Gasdurchtrittsraum 7 über einen entsprechenden Auslaß und gelangt in eine daran angeschlossene Brenneranschlußleitung 10. In der Brenneranschlußleitung 10 befindet sich ein Kühler 18, mit dem Wasser aus dem durchgeführten Stoffgemisch auskondensiert werden kann. Optional ist in der Brenneranschlußleitung 10 außerdem ein Druckhalteventil vorgesehen.

Vom Kühler 18 führt die Brenneranschlußleitung 10 in den ersten Teil 11a einer dreiteiligen katalytischen Brennereinrichtung 11a, 11b, 11c. Die drei Brennerteile 11a, 11a, 11c sind seriell hintereinandergeschaltet, wobei zwischen dem ersten und dem zweiten Teil 11a, 11b eine erste Brennstoffspeiseleitung 12 und zwischen dem zweiten und dritten Teil 11b, 11c eine zweite Brennstoffspeiseleitung 13 vorgesehen sind. Aus dem dritten Brennerteil 11c wird das Verbrennungsabgas über eine Abgasleitung 14 abgeführt. Der erste Brennerteil 11a steht über eine erste wärmeleitende Trennwand 15 mit dem Membranmodul 4 in Wärmekontakt. Der zweite Brennerteil 11b steht über eine zweite wärmeleitende Trennwand 16 mit dem Reformierungsreaktor 1 in Wärmekontakt, und der dritte Brennerteil 11c steht über eine dritte wärmeleitende Trennwand 17 mit dem Verdampfer 2 in Wärmekontakt.

Die solchermaßen aufgebaute Anlage kann durch ein entsprechendes Betriebsverfahren bei einem Kaltstart sehr rasch auf ihren Normalbetrieb hochgefahren werden, in welchem die Anlagenkomponenten ihren jeweiligen normalen Betriebszustand, insbesondere die zur Wasserdampfreformierung erforderliche erhöhte Temperatur und den zur im wesentlichen vollständigen Wasserstoffdiffusion durch die Membran 6 hindurch zusätzlich benötigten, erhöhten Betriebsdruck, erreicht haben. Ein vorteilhaftes, hierzu geeignetes Verfahren wird nachfolgend unter Bezugnahme auf Fig. 2 erläutert, in welcher wesentliche Schritte dieses Verfahrens veranschaulicht sind.

Nach Auslösen eines Kaltstartes 20 des Kraftfahrzeuges und damit auch der Reformierungsanlage wird in einer ersten Betriebsphase 21 Wasserstoff, der in einem vorangegangenen Betriebszyklus erzeugt und zwischengespeichert wurde, und/oder Methanol zusammen mit einem sauerstoffhaltigen Gas, z.B. Luft, in die katalytische Brennereinrichtung 11a, 11b 11c eingeleitet und dort katalytisch flammenlos verbrannt. Speziell wird dabei das brennbare Gemisch dem mit dem Reformierungsreaktor 1 in Wärmekontakt stehenden Brennerteil 11b über die vorgeschaltete erste Brennstoffspeiseleitung 12 und dem mit dem Verdampfer 2 in Wärmekontakt stehenden Brennerteil 11c über die diesem vorgeschaltete zweite Brennstoffspeiseleitung 13 zugeführt. Der katalytische Verbrennungsvorgang wird so eingestellt, daß sich diese beiden Brennerteile 11b, 11c auf eine über dem Siedepunkt von Wasser liegende Temperatur erhitzen. Dementsprechend werden der Reformierungsreaktor 1 und der Verdampfer 2 auf etwa dieses Temperaturniveau aufgeheizt.

Sobald der Reformierungsreaktor 1 und der Verdampfer 2 das entsprechende Temperaturniveau erreicht haben, was typischerweise bereits nach wenigen Sekunden Dauer der ersten Betriebsphase der Fall ist, wird in einer anschließenden zweiten Betriebsphase 22 Wasser und Methanol über die Dosiereinrichtung 3 in den Verdampfer 2 dosiert. Dabei wird zu diesem Zeitpunkt ein gegenüber dem späteren Normalbetrieb erhöhtes Wasser/Methanol-Verhältnis gewählt. Das zudosierte Gemisch wird im Verdampfer 2 verdampft und vorzugsweise überhitzt und dann in den Reformierungsreaktor 1 eingeleitet, wo bereits ein gewisser Methanolreformierungsumsatz stattfindet. Der relativ hohe Wasseranteil begünstigt dabei die Vermeidung unerwünscht hoher CO-Konzentrationen.

Das im Reformierungsreaktor 1 gebildete Stoffgemisch gelangt in das Membranmodul 4, speziell in dessen Gasdurchtrittsraum 7, wo je nach momentanem Betriebsdruck und Betriebstemperatur ggf. bereits Wasserstoff, der im zugeführten Stoffgemisch enthalten ist, abgetrennt und über die Wasserstoffabzugsleitung 9 abgezogen werden kann. Mit ansteigender Membrantemperatur wächst dabei das Wasserstoffdiffusionsvermögen der Membran 6. Zudem begünstigt ein höherer Betriebsdruck, d.h. Differenzdruck zwischen Gasdurchtrittsraumraum 7 und Wasserstoffabzugsraum 8 die selektrive Wasserstoffdiffusion. Ein jeweils geeignet hoher Betriebsdruck läßt sich dadurch einstellen, daß eine entsprechende Menge Druckluft und ggf. zusätzlich Wasser über die Zwischeneinspeiseleitung 5 in die Verbindungsleitung vom Reformierungsreaktor 1 zum Membranmodul 4 eingespeist wird. Das in den Gasdurchtrittsraum 7 eingeleitete, noch heiße Stoffgemisch erwärmt die anfangs noch kalte Membran 6. Der hohe Wasseranteil des in dieser zweiten Betriebsphase verwendeten Methanol/Wasserdampf-Gemischs begünstigt diese Membranerwärmung dadurch, daß das Wasser als Wärmeträgermedium fungiert, um Wärme vom Verdampfer 2 über den Reformierungsreaktor 1 rasch zum Membranmodul 4 zu transportieren, wodurch gleichzeitig der Verdampfer 2 gekühlt und damit vor Überhitzung geschützt wird.

Vom Membranmodul 4 gelangt das Stoffgemisch in den Kühler 18, wo im Stoffgemisch ggf. noch enthaltenes Wasser auskondensiert wird, so daß das aus dem Kühler 18 austretende Stoffgemisch höchstens einen Wasseranteil aufweist, der die Funktion der katalytischen Brennereinrichtung 11a, 11b, 11c nicht beeinträchtigt. Vom Kühler 18 gelangt das Stoffgemisch dann in den ersten Brennerteil 11a, in welchem das im Stoffgemisch enthaltene brennbare Material, wie unreformiertes Methanol und/oder im Membranmodul 4 nicht abgetrennter Wasserstoff, katalytisch verbrannt wird. Der sich dadurch erhitzende erste Brennerteil 11a bewirkt eine weitere Erwärmung des mit ihm in Wärmekontakt stehenden Membranmoduls 4. Bei Bedarf kann zusätzlich eine direkte Methanol- und/oder Wasserstoffeinspeisung in diesen Brennerteil 11a analog zu den beiden anderen Brennerteilen 11b, 11c vorgesehen sein.

In einer an die zweite anschließenden dritten Betriebsphase 23 wird die direkte, zusätzliche Methanol- und/oder Wasserstoffeinspeisung in die betreffenden Brennerteile 11a, 11b, 11c sukzessive mit zunehmender Erhöhung der Temperatur im Verdampfer 2 und im Reformierungsreaktor 1 sowie im Membranmodul 4 reduziert. In einer sich mit der dritten überschneidenden oder an diese anschließenden vierten Betriebsphase 24 wird die Konzentration des in den Verdampfer 2 eindosierten Methanols sukzessive mit steigender Temperatur der Wasserstoffabtrennmembran 6 erhöht. Dabei wird die zudosierte Methanolmenge zu jedem Zeitpunkt so gering gehalten, daß deren Energiegehalt gerade ausreicht, die Energie für die Verdampfung und die endotherme Wasserdampfreformierungsreaktion aufzubringen, ohne daß Überhitzungen in der katalytischen Brennereinrichtung 11a, 11b, 11c aufgrund zu hoher, nicht reformierter, vom Reaktor 1 über das Membranmodul 4 in die katalytische Brennereinrichtung 11a, 11b, 11c eingeleiteter Methanolanteile auftreten. Die Methanolkonzentration im zu reformierenden Methanol/Wasserdampf-Gemisch nähert sich dadurch immer mehr derjenigen Konzentration, die im Normalbetrieb bei warmgelaufener Anlage verwendet wird.

Während des sich über die vier obigen Betriebsphasen erstreckenden Aufheizvorgangs der Anlage werden der Verdampfer 2 und/oder der Reformierungsreaktor 1 vorzugsweise bei einer Temperatur betrieben, die oberhalb der üblichen Betriebstemperatur im späteren Normalbetrieb liegt, um das Warmlaufen der Anlage zu beschleunigen. Dies wird durch entsprechende Erhitzung der zugehörigen Brennerteile 11b, 11c erreicht. Zusätzlich ist vorzugsweise vorgesehen, während dieses Aufheizvorgangs den Systemdruck im Membranmodul 4 in Abhängigkeit vom Taupunkt des Heizgases, d.h. des hindurchgeleiteten Stoffgemischs, durch entsprechende Luft-/Wasserzuführung über die Zwischeneinspeiseleitung 5 und Steuerung des optionalen Druckhalteventils kontinuierlich bis zum Erreichen des Normalbetriebsdruckes, der im späteren Normalbetrieb verwendet wird, zu erhöhen.

Wenn die Reformierungsanlage zur Bereitstellung von Wasserstoff für ein Brennstoffzellensystem verwendet wird, kann das während des Aufheizvorganges über die Abgasleitung 14 von der katalytischen Brennereinrichtung 11a, 11b, 11c abgegebene, heiße Brennerabgas zum Aufheizen eines Brennstoffzellen-Kühlkreislaufs benutzt werden.

Sobald dann durch die vorstehend beschriebenen Kaltstart-Betriebsphasen die Anlagenkomponenten, insbesondere der Reformierungsreaktor 1, der Verdampfer 2 und das Membranmodul 4, ihren normalen Betriebszustand erreicht haben, äußert sich dies darin, daß die zuvor kontinuierlich steigende Wasserstoffausbeute an der Membran 6 und die Menge an in den Verdampfer 2 eingespeistem Methanol ihre für die normalen Betriebsbedingungen bei warmgelaufener Anlage typischen Werte erreichen, wonach die Anlage anschließend im Normalbetrieb 25 gefahren wird. Dieser ist insbesondere dadurch charakterisiert, daß das Wasser/Methanol-Verhältnis des im Verdampfer 2 verdampften Methanol/Wasserdampf-Gemischs geringer als während der zweiten bis vierten Betriebsphase 22, 23, 24 des Aufheizvorganges ist und der Differenzdruck an der Membran 6 einen Wert von 10bar oder mehr, typischerweise zwischen etwa 10bar und etwa 40bar, aufweist. Wenn der Verdampfer 2 und/oder der Reaktor 1 während des Aufheizvorganges auf eine Temperatur über der normalen Betriebstemperatur aufgeheizt wurden, wird die Temperatur dort beim Übergang in den Normalbetrieb wieder auf die normale Betriebstemperatur zurückgenommen, indem die Heizleistung der zugehörigen katalytischen Brennerteile 11b, 11c entsprechend reduziert wird.

Die Anlage bleibt dann im Normalbetrieb 25, bis das Fahrzeug abgestellt wird. Die Anlage kann dann ebenfalls abgestellt werden (Schritt 26), da sie durch das beschriebene Verfahren zu einem späteren Zeitpunkt auch in kaltem Systemzustand rasch wieder gestartet werden kann, so daß in sehr kurzer Zeit Wasserstoff geliefert werden kann, was besonders für den mobilen Anwendungsfall in brennstoffzellenbetriebenen Kraftfahrzeugen von großem Vorteil ist. Denn dadurch erübrigt sich ein größerer Wasserstoffzwischenspeicher, ohne daß die Reformierungsanlage bei abgestelltem Fahrzeug in betriebsbereitem, erwärmtem Zustand gehalten werden muß.

## Patentansprüche

1. Verfahren zum Betrieb einer Anlage zur Wasserdampfreformierung eines Kohlenwasserstoffs mit einem Verdampfer (2), einem Reformierungsreaktor (1), einem diesem nachgeschalteten Membranmodul (4) zur selektiven Wasserstoffabtrennung und einer katalytischen Brennereinrichtung (11a, 11b, 11c), bei dem
- bei warmgelaufener Anlage im Normalbetrieb der Kohlenwasserstoff und Wasser in einem einstellbaren Verhältnis im Verdampfer erhitzt werden, das erhitzte Gemisch dem Reformierungsreaktor zugeführt und der Kohlenwasserstoff dort einer Wasserdampfreformierung unterzogen wird und der dadurch gebildete Wasserstoff im nachgeschalteten Membranmodul bei geeignet hohem Normalbetriebsdruck und geeignet hoher Normalbetriebstemperatur abgetrennt wird,
**dadurch gekennzeichnet, daß**
- beim Kaltstart der Anlage ein Aufheizvorgang durchgeführt wird, bei dem in einer ersten Betriebsphase die wenigstens mit dem Reformierungsreaktor (1) und dem Verdampfer (2) über eine jeweilige wärmeleitende Trennwand (16, 17) in Wärmekontakt stehende, katalytische Brennereinrichtung (11a, 11b, 11c) auf eine Temperatur oberhalb der Wassersiedetemperatur erhitzt wird, indem der Kohlenwasserstoff und/oder Wasserstoff unter Zufuhr eines sauerstoffhaltigen Gases katalytisch verbrannt wird, und in einer anschließenden zweiten Betriebsphase dem Verdampfer Wasser und der Kohlenwasserstoff mit gegenüber dem Normalbetrieb erhöhtem Wasser/Kohlenwasserstoff -Verhältnis zugeführt und das aus dem Reformierungsreaktor austretende Stoffgemisch über das Membranmodul (4) der katalytischen Brennereinrichtung (11a, 11b, 11c) zugeführt wird.

2. Verfahren nach Anspruch 1, weiter
**dadurch gekennzeichnet, daß**
in einer an die zweite anschließenden dritten Betriebsphase des Aufheizvorganges die Zufuhr des Kohlenwasserstoffs bzw. des Wasserstoffs in die katalytische Brennereinrichtung (11a, 11b, 11c) verringert wird.

3. Verfahren nach Anspruch 2, weiter
**dadurch gekennzeichnet, daß**
in einer vierten Betriebsphase des Aufheizvorganges der Kohlenwasserstoffanteil an dem im Verdampfer bereiteten Kohlenwasserstoff/Wasserdampf-Gemisch mit steigender Membranmodultemperatur erhöht wird.

4. Verfahren nach einem der Ansprüche 1 bis 3, weiter
**dadurch gekennzeichnet, daß**
während des Aufheizvorganges der Betriebsdruck im Membranmodul mit steigender Taupunkttemperatur des durchgeführten, aufgeheizten Stoffgemischs erhöht wird.

5. Verfahren nach einem der Ansprüche 1 bis 4, weiter
**dadurch gekennzeichnet, daß**
das aus dem Reformierungsreaktor (1) austretende, über das Membranmodul (4) geleitete Stoffgemisch wenigstens während der zweiten Betriebsphase vor Eintritt in die katalytische Brennereinrichtung (11a, 11b, 11c) auf eine zum Auskondensieren von Wasser ausreichende Temperatur heruntergekühlt wird.

6. Verfahren zum Betrieb eines einen Kühlkreislauf aufweisenden Brennstoffzellensystems, bei dem
- den Brennstoffzellen der von einer Anlage zur Wasserdampfreformierung eines Kohlenwasserstoffs erzeugte Wasserstoff zugeführt wird,
**dadurch gekennzeichnet, daß**
- der Wasserstoff für die Brennstoffzellen von einer nach dem Verfahren gemäß einer der Ansprüche 1 bis 5 betriebenen Wasserdampfreformierungsanlage erzeugt und das Verbrennungsabgas von deren katalytischer Brennereinrichtung (11a, 11b, 11c) zum Aufheizen des Kühlkreislaufs des Brennstoffzellensystems verwendet wird.

7. Anlage zur Wasserdampfreformierung eines Kohlenwasserstoffs, insbesondere gemäß dem Verfahren nach einem der Ansprüche 1 bis 5, mit
- einem Reformierungsreaktor (1),
- einem dem Reformierungsreaktor vorgeschalteten Verdampfer (2) mit zugehöriger Dosiereinrichtung (3),
- einem dem Reformierungsreaktor nachgeschalteten Membranmodul (4) und
- einer katalytischen Brennereinrichtung (11a, 11b, 11c),
**dadurch gekennzeichnet, daß**
ein erster Teil (11b) der katalytischen Brennereinrichtung mit dem Reformierungsreaktor (1) und ein zweiter Teil (11c) derselben mit dem Verdampfer (2) über eine jeweilige Trennwand (16, 17) im Wärmekontakt steht.

8. Anlage nach Anspruch 7, weiter
**gekennzeichnet durch**
einen Kühler (18) zum Auskondensieren von Wasser, das in dem aus dem Reformierungsreaktor (1) austretenden und über das Membranmodul (4) zur katalytischen Brennereinrichtung (11a, 11b, 11c) geleiteten Stoffgemisch enthalten ist, wobei der Kühler zwischem dem Membranmodul und der katalytischen Brennereinrichtung angeordnet ist.

## Claims

1. A method of operating an installation for steam reforming of a hydrocarbon, having an evaporator (2), a reforming reactor (1), a membrane module (4) connected downstream for selective hydrogen separation and a catalytic burner device (11a 11b, 11c), in which
- in the case of a heated installation, the hydrocarbon and water are heated in normal operation in an adjustable ratio in the evaporator, the heated mixture is supplied to the reforming reactor and the hydrocarbon is there subjected to steam reforming and the hydrogen formed thereby is separated in the downstream membrane module at suitably high normal operating pressure and at suitably high normal operating temperature,
**characterised in that**
- if the installation starts from cold, a heating process is performed, in which the catalytic burner device (11a 11b, 11c) in thermal contact at least with the reforming reactor (1) and the evaporator (2) via respective heat-conducting partition walls (16, 17) is heated in a first operating phase to a temperature above water boiling temperature, the hydrocarbon and/or hydrogen being catalytically combusted with supply of an oxygen-containing gas, and water and the hydrocarbon are supplied to the evaporator in a subsequent second operating phase at a water/hydrocarbon ratio which is elevated with respect to normal operation and the mixture of substances leaving the reforming reactor is supplied to the catalytic burner device (11, 11b, 11c) via the membrane module (4).

2. A method according to claim 1, further **characterised in that**, in a third operating phase of the heating process following the second, the supply of hydrocarbon or hydrogen to the catalytic burner device (11a, 11b, 11c) is reduced.

3. A method according to claim 2, further **characterised in that**, in a fourth operating phase of the heating process, the hydrocarbon fraction of the hydrocarbon/steam mixture prepared in the evaporator is increased as the membrane module temperature rises.

4. A method according to one of claims 1 to 3, further **characterised in that**, during the heating process, the operating pressure in the membrane module is increased as the dew point temperature of the passed-through, heated mixture of substances increases.

5. A method according to one of claims 1 to 4, further **characterised in that** the mixture of substances leaving the reforming reactor (1) and passed through the membrane module (4) is cooled at least during the second operating phase prior to entry into the catalytic burner device (11a 11b, 11c) to a temperature sufficient to condense out water.

6. A method of operating a fuel cell system comprising a cooling circuit, in which
- the hydrogen produced by an installation for steam reforming of a hydrocarbon is supplied to the fuel cells,
**characterised in that**
- the hydrogen for the fuel cells is produced by a steam reforming installation operated by the method according to one of claims 1 to 5 and the burner gas from the catalytic burner device (11a 11b, 11c) thereof is used to heat the cooling circuit of the fuel cell system.

7. An installation for steam reforming of a hydrocarbon, in particular by the method according to one of claims 1 to 5, having
- a reforming reactor (1),
- an evaporator (2) connected upstream of the reforming reactor, with associated metering device (3),
- a membrane module (4) connected downstream of the reforming reactor and
- a catalytic burner device (11a, 11b, 11c),
**characterised in that**
a first part (11b) of the catalytic burner device is in thermal contact with the reforming reactor (1) and a second part (11c) thereof with the evaporator (2) via respective partition walls (16, 17).

8. An installation according to claim 7, further **characterised by** a condenser (18) for condensing out water which is contained in the mixture of substances leaving the reforming reactor (1) and passed to the catalytic burner device (11a 11b, 11c) via the membrane module (4), wherein the condenser is arranged between the membrane module and the catalytic burner device.

## Revendications

1. Procédé de fonctionnement d'un dispositif de reformage à la vapeur d'un hydrocarbure utilisant un évaporateur (2), un réacteur de reformage (1), un module à membrane (4) monté en aval dudit réacteur et permettant la séparation sélective de l'hydrogène, et un dispositif de combustion catalytique (11a, 11b, 11c), dans le cadre duquel
- dans un dispositif en marche et fonctionnant normalement, l'hydrocarbure et de l'eau sont, dans un rapport variable, chauffés dans l'évaporateur, le mélange chauffé est amené au réacteur de reformage où l'hydrocarbure subit un reformage à la vapeur, et l'hydrogène ainsi formé est séparé dans le module à membrane monté en aval à une pression et à une température de fonctionnement normales convenablement élevées,
**caractérisé en ce que**
- lors du démarrage à froid du dispositif, on procède à une opération de chauffage dans le cadre de laquelle, dans une première phase de fonctionnement, le dispositif de combustion catalytique (11a, 11b, 11c) en contact thermique au moins avec le réacteur de reformage (1) et l'évaporateur (2) via une paroi (16, 17) thermoconductrice est porté à une température supérieure à la température d'ébullition de l'eau par combustion catalytique de l'hydrocarbure et/ou de l'hydrogène en présence d'un gaz contenant de l'oxygène, et, dans une deuxième phase de fonctionnement succédant à la première, de l'eau et l'hydrocarbure sont amenés à l'évaporateur dans un rapport eau/hydrocarbure accru par rapport à celui utilisé en fonctionnement normal, et le mélange sortant du réacteur de reformage est amené au dispositif de combustion catalytique (11a 11b, 11c) via le module à membrane (4).

2. Procédé selon la revendication 1,
**caractérisé en ce que**
dans une troisième phase succédant à la seconde phase de fonctionnement de l'opération de chauffage, l'apport d'hydrocarbure ou d'hydrogène dans le dispositif de combustion catalytique (11a 11b 11c) est réduit.

3. Procédé selon la revendication 2,
caractéristé en ce que
dans une quatrième phase de fonctionnement de l'opération de chauffage, on augmente la part d'hydrocarbure contenue dans le mélange hydrocarbure/vapeur d'eau préparé dans l'évaporateur à mesure qu'augmente la température à l'intérieur du module à membrane.

4. Procédé selon l'une des revendications 1 à 3,
**caractérisé en ce que**
pendant l'opération de chauffage, on augmente la pression de fonctionnement à l'intérieur du module à membrane à mesure qu'augmente la température du point de rosée du mélange chauffé et conduit au travers du module.

5. Procédé selon l'une des revendications 1 à 4,
**caractérisé en ce que**
le mélange sortant du réacteur de reformage (1) et conduit au travers du module à membrane (4) est, pour le moins pendant la deuxième phase de fonctionnement, avant son entrée dans le dispositif de combustion catalytique (11a, 11b, 11c), ramené à une température suffisamment basse pour permettre la condensation de l'eau.

6. Procédé de fonctionnement d'un système à piles à combustible présentant un circuit de refroidissement, dans le cadre duquel
- l'hydrogène produit dans un dispositif de reformage à la vapeur d'un hydrocarbure est amené à des piles à combustible
**caractérisé en ce que**
- l'hydrogène destiné aux piles à combustible est produit dans un dispositif de reformage à la vapeur fonctionnant conformément au procédé selon l'une des revendications 1 à 5 et le gaz d'échappement issu du dispositif de combustion catalytique (11a, 11b, 11c) est utilisé pour le chauffage du circuit de refroidissement du système à piles à combustible.

7. Dispositif de reformage à la vapeur d'un hydrocarbure, notamment conformément au procédé selon l'une des revendications 1 à 5, avec
- un réacteur de reformage (1),
- un évaporateur (2) monté en amont du réacteur de reformage et équipé d'un dispositif de dosage (3),
- un module à membrane (4) monté en aval du réacteur de reformage et
- un dispositif de combustion catalytique (11a, 11b, 11c),
**caractérisé en ce que**
une première partie (11b) du dispositif de combustion catalytique et le réacteur de reformage (1), et une deuxième partie (11c) dudit dispositif de combustion et l'évaporateur (2) sont respectivement en contact thermique via leur paroi (16, 17) respective.

8. Dispositif selon la revendication 7,
**caractérisé par**
un système de refroidissement (18) permettant la condensation de l'eau contenue dans le mélange sortant du réacteur de reformage (1) et amenée au dispositif de combustion catalytique (11a 11b, 11c) via le module à membrane (4), le système de refroidissement étant disposé entre le module à membrane et le dispositif de combustion catalytique.
